(19) Europäisches Patentamt
European Patent Office
Office européen des brevets

(11) **EP 3 009 957 A2**

(12) **EUROPEAN PATENT APPLICATION**

(43) Date of publication:
**20.04.2016 Bulletin 2016/16**

(51) Int Cl.:
***G06K 9/00*** *(2006.01)*

(21) Application number: **15154204.0**

(22) Date of filing: **06.02.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **14.10.2014 KR 20140138411
14.01.2015 KR 20150006676**

(71) Applicant: **Soonchunhyang University Industry Academy
Cooperation Foundation
Asan-si, Chungcheongnam-do 336-745 (KR)**

(72) Inventor: **NAM, Yun-Young
336-750 Chungcheongnam-do (KR)**

(74) Representative: **Appleyard Lees IP LLP
15 Clare Road
Halifax HX1 2HY (GB)**

(54) **Apparatus and method for poomsae recognition and dan promotion test of taekwondo based on skeleton of human body using depth camera**

(57)  The present invention relates to a Dan promotion test apparatus and a method thereof for recognizing Taekwondo Poomsae and automatically judging Dan promotion based on a skeleton of a human body using a depth camera.

The major configuration of the present invention includes an object feature extraction unit for extracting features of an object input from the depth camera, a motion definition unit for defining various motions of the object, a motion recognition unit for recognizing a behavior of the object using the information obtained through the object feature extraction unit and the motion definition unit, and a judgment unit for judging correctness of a motion of the object confirmed by the motion recognition unit.

FIG. 1

**EP 3 009 957 A2**

Description

## BACKGROUND OF THE INVENTION

### Field of the Invention

The present invention relates to a Dan promotion test apparatus and a method thereof, in which a skeleton of a human body is extracted using a depth camera such as a Kinect, and the skeleton is used for Poomsae recognition and Dan promotion test of Taekwondo.

### Background of the Related Art

A technique of recognizing a motion of a person is divided into a contact method of attaching a sensor or a specific device on a body of the person and utilizing data of sensing movement of the body to recognize a motion and a non-contact method of tracing images of movement of the person using a camera and extracting motion recognition information. Although the contact method is a method of acquiring information by directly attaching a sensor or a device capable of sensing movement of a user on a body of a person, which is advantageous in obtaining comparatively correct information directly through the sensor, it is very inconvenient for the user to wear the sensor or the equipment. Most of the non-contact methods use a technique of extracting movement information after capturing movement of a person as an image.

A 3D contents control method of the contact method is a method in which a user himself or herself wears a sensor or a device capable of sensing movement of the user and interacts with 3D contents. Representative interfaces used in the contact method include a data glove, a motion tracker and the like using an optical fiber, a magnetic sensor or a gyro sensor. Most of input devices of the contact method are commercialized. For example, there are various 3D physical interfaces such as a touch-based 3D interaction handling interface for navigation contents manufactured in 3D, a Wii Remote motion controller interface of Nintendo, a PlayStation Move interface of Sony, a GlobalFish interface dealing with a space mouse, a Groove Pad interface embedded with a touch pad which implements the joystick function as an elastic ring, and the like.

Most of the 3D contents control methods based on the non-contact method trace and recognize movement of a person from the image information acquired through a camera. The non-contact method includes two method of a marker-based method of attaching a specific marker on a part of a body and tracing movement of the body using a visual technique and a marker-less method which does not use a marker. The marker method is a method of previously setting a color and a shape of an image, an LED, an infrared ray and the like in the attributes of a marker and tracing the marker, which can comparatively easily and rapidly trace motions of a user. Although this method may extract feature points of the image in a relatively speedy way, it is disadvantageous in that the user should still wear the unnatural markers. The marker-less method may rapidly trace movement in real-time by sensing a direction, a speed or the like of the movement of a user using a technique such as an optical flow, a background subtraction method, a motion history image or the like and trace the movement by tracking brightness of a light source. The marker-less method is disadvantageous in that it is vulnerable to external factors such as a position of a camera, interference of a light source, a shadow and the like.

Dan promotion of Taekwondo is entirely determined by subjectivity of a judge's opinion, and since the promotion is affected by external factors, such as a tendency, feeling or the like of each judge, and consistent criteria for the promotion do not exist, noises are ceaselessly occurred.

A background technique of the present invention is disclosed in Korean Patent Publication No. 10-2013-0044473 filed on May 3, 2010.

### SUMMARY OF THE INVENTION

Therefore, the present invention has been made in view of the above problems, and it is an object of the present invention to provide a Dan promotion test apparatus for extracting depth information and visual information with regard to movement of a person using a depth camera, recognizing a Taekwondo Poomsae using the information and automatically performing a Dan promotion test.

Another object of the present invention is to provide a Dan promotion test apparatus including a method of receiving data of a standard Poomsae movement database, in which data on standard Poomsae movements are stored, and coordinate data from a depth camera in order to determine whether or not Taekwondo motions of a person meet Dan promotion criteria, measuring correctness of the motions by comparing the coordinate data with a previously coordinate value, and determining whether or not the motions meet the criteria for passing the Dan promotion test by comparing a continued sequence of the Taekwondo Poomsae movements.

To accomplish the above objects, according to one aspect of the present invention, there is provided a Taekwondo Poomsae recognition and Dan promotion test apparatus based on a skeleton of a human body using a camera, the apparatus including: an object feature extraction unit for extracting features of an object input from the depth camera; a motion definition unit for defining various motions of the object; a motion recognition unit for recognizing a behavior of the object using the information obtained through the object feature extraction unit and the motion definition unit; and a judgment unit for judging correctness of a motion of the object confirmed by the motion recognition unit.

According to another aspect of the present invention, there is provided a method for Poomsae recognition and Dan promotion test of Taekwondo based on a skeleton of a human body using a camera, the method comprising the steps of: an object feature extraction step of extracting features of an object input from the depth camera; a motion definition step of defining various motions of the object; a motion recognition step of recognizing a behavior of the object using the information obtained through the object feature extraction step and the motion definition step; and a judgment step of judging correctness of a motion of the object confirmed by the motion recognition unit.

According to exemplary embodiments, the method comprises using the test apparatus according to the previous aspect.

## BRIEF DESCRIPTION OF THE DRAWINGS

FIG. 1 is a view showing the entire structure of a Taekwondo Poomsae recognition and Dan promotion test apparatus based on a skeleton of a human body using a depth camera.

FIG. 2 is a view showing depth information and skeleton data input through an RGB-D sensor.

FIG. 3 is a view showing joints of a person and extracted parameters of a skeleton.

FIG. 4 is a view showing distance values obtained from coordinates of each of joints when a standing person pulls the right hand.

FIG. 5 is a flowchart illustrating the entire flow of a Taekwondo Poomsae recognition and Dan promotion test apparatus based on a skeleton of a human body using a depth camera.

FIG. 6 is a flowchart illustrating the detailed flow of the judgment step according to an embodiment of the present invention.

## DETAILED DESCRIPTION OF THE PREFERRED EMBODIMENT

Details of other embodiments are include in the detailed description and the drawings.

Advantages and features of the present invention and a method of achieving the same will be more clearly understood from embodiments described below with reference to the accompanying drawings. However, the present invention is not limited to the following embodiments but may be implemented in various different forms. The embodiments are provided merely to complete disclosure of the present invention and to fully provide a person having ordinary skill in the art to which the present invention pertains with the category of the invention. The invention is defined only by the category of the claims. Wherever possible, the same reference numbers will be used throughout the specification to refer to the same or like parts.

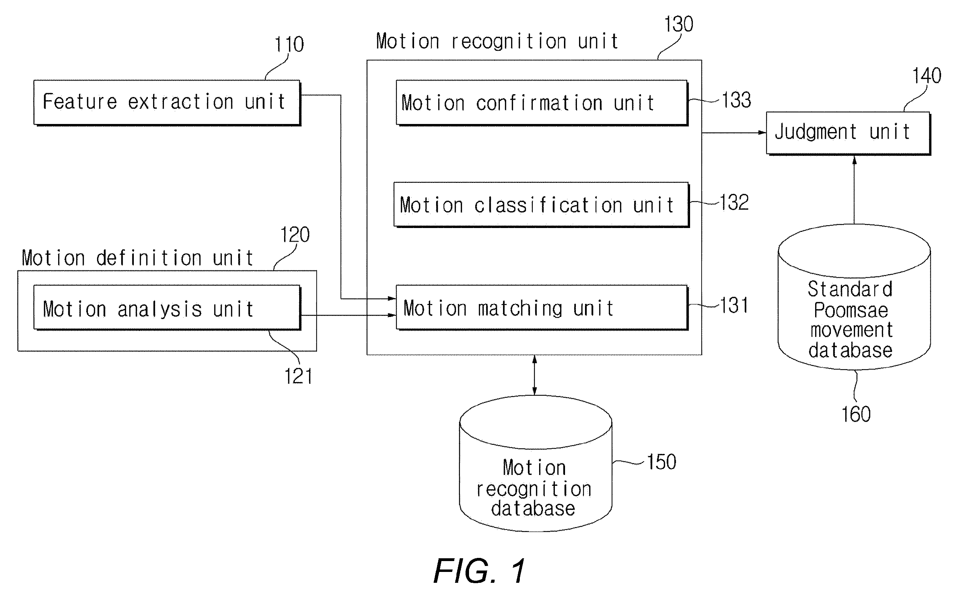

FIG. 1 shows the entire structure of a Taekwondo Poomsae recognition and Dan promotion test apparatus based on a skeleton of a human body using a depth camera according to the present invention. The Taekwondo Poomsae recognition and Dan promotion test apparatus according to the present invention includes a feature extraction unit 110 for extracting a depth and visual features from a skeleton of a human body, i.e., an object, input from the depth camera, a motion definition unit 120 including a motion analysis unit 121 for analyzing a motion of the object to define a motion specifically expressed by the motion of the object, and a motion recognition unit 130 for recognizing the motion using the information extracted by the feature extraction unit 110 and the motion definition unit 120. The depth feature of the object is an RGB-D data combining RGB data extracted from the depth camera and depth information of the object. In addition, the motion recognition unit 130 further includes a motion recognition database 150 for recognizing a motion of the extracted information. Data related to the recognized Taekwondo motions such as data on Riding Stance, Left Down Block, Right Down Block, Left Foot Front Kick, Right Foot Front Kick and the like are stored in the motion recognition database.

The motion recognition unit 130 includes three specific modules of a motion matching unit 131, a motion classification unit 132 and a motion confirmation unit 133. The motion matching unit 131 matches a motion by comparing the information extracted from the feature extraction unit 110 and the motion definition unit 120 with the data of the motion recognition database 150 and confirms the motion after classifying the motion using a result of the matching.

The Taekwondo Poomsae recognition and Dan promotion test apparatus includes a judgment unit 140 for determining Dan promotion by judging a sequence of motions after confirming the motion of the object. The judgment unit includes a standard Poomsae movement database 160 to judge whether or not the sequence of motions recognized by the motion recognition unit 130 is correct. Data on Taeheuk 1 jang to Taeheuk 8 jang, which are generally known Poomsaes of Yoodanja(black belts) of Taekwondo, and Poomsae data of Koryo, Keumgang, Taeback, Pyongwon and the like, which are Poomsaes of Yookeupja(color belts), are included in the standard Poomsae movement database 160.

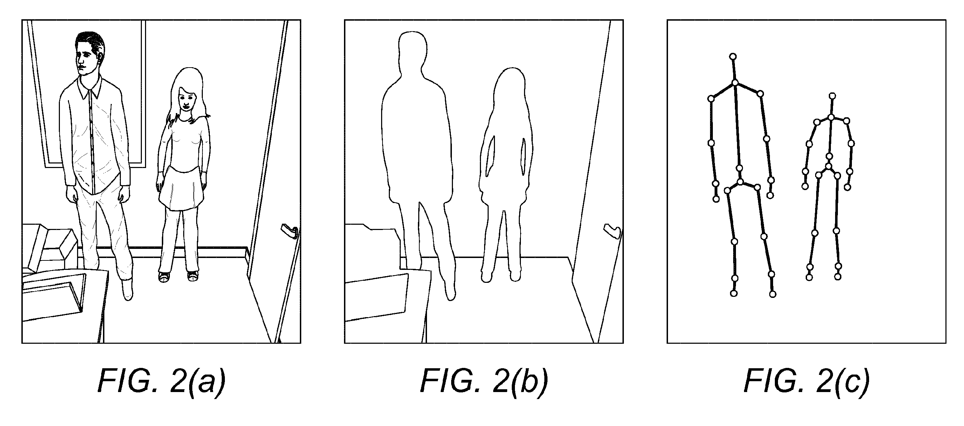

FIG. 2 is a view showing depth information and skeletons of data input through an RGB-D sensor. FIG. 2(a) shows an RGB camera image input through an RGB-D camera. Two objects (persons) are shown in the image. FIG. 2(b) is a view showing depth information of the two objects of FIG. 2(a), which is displayed after being automatically segmented by the depth camera. The yellow and purple labels show the segmented objects. The gray label shows a non-IR reflective area such as a chair or a floor. FIG. 2(c) shows principal skeletons of the objects recognized by measuring reflective wave strength of connected points by projecting infrared rays in a marked area through the depth camera, measuring a distance through a reflective strength, and estimating a point of a weak reflective strength as a point at a far distance and a point of a strong reflective strength as a point of a user on the front side.

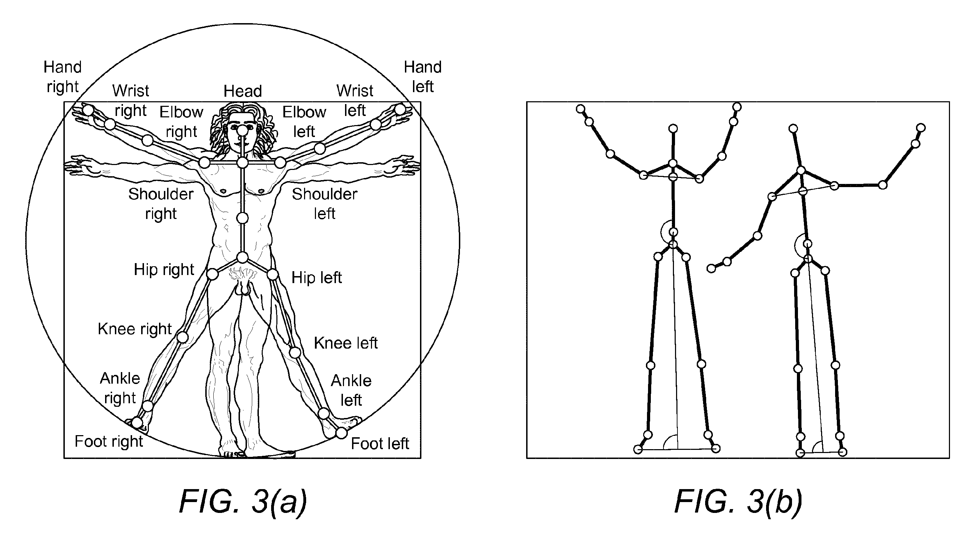

FIG. 3 is a view showing joints of a person and extracted parameters of a skeleton. A depth camera may define a motion based on movement of a wrist, an elbow, a shoulder and the like of a person using a technique of recognizing a skeleton of a human being. For example, moving to the left refers to change of the wrist and the elbow of the right arm moving to the left side with respect to the shoulder line, moving to the right refers to moving the wrist and the elbow of the left arm to the right side with respect to the shoulder line, moving upward refers to moving a wrist and an elbow above the shoulder line, moving downward refers to moving a wrist and an elbow below the shoulder line, expansion refers to moving both hands toward outside of a reference, contraction refers to moving both hands toward inside of a reference, and selection refers to moving one hand forward. Like this, as shown in FIG. 3(b), a movement can be determined according to change of coordinates and angles of joints which are connection points in the skeleton of a human being.

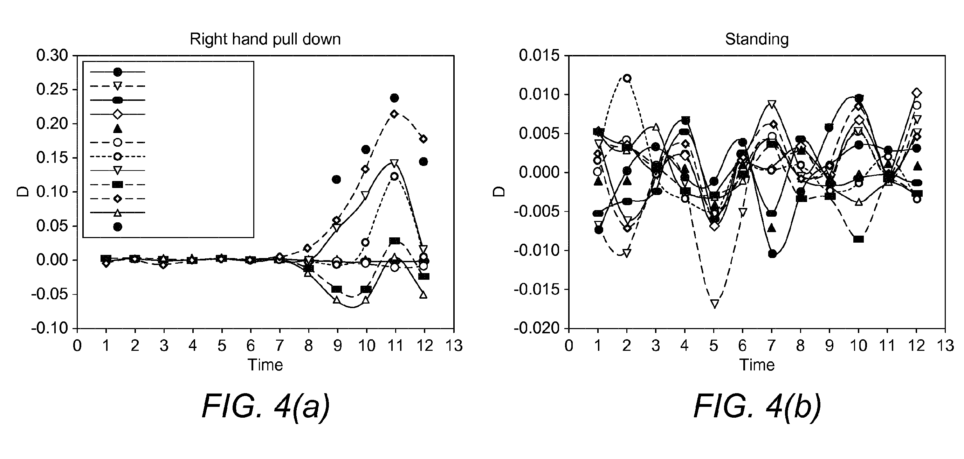

FIG. 4 is a view showing distances with respect to coordinates between joints when a standing person pulls the right hand. In the present invention, a distance deviation of each joint is considered by using connected movements of a standard Poomsae in order to match a moving distance of an input sequence for modeling a posture and a motion of a human being. For example, a distance $D_{r,i}$ between each joint $P_i$ and a reference point is calculated with respect to time to sense a motion of the upper body. A center point between the left side and the right side of the left and right shoulder joints is calculated by analyzing the reference point. $C_x^{up}$ and $C_y^{up}$ are calculated as shown in [mathematical expression 1] using the distance deviation of each joint from the center point of the upper body.

[Mathematical expression 1]

$$C_x^{up} = \frac{j_x^{sh,l} + j_x^{sh,r}}{2}, \quad C_y^{up} = \frac{j_y^{sh,l} + j_y^{sh,r}}{2}$$

Here, $j^{sh,1}$ and $j^{sh,r}$ denote coordinate values of the left and right shoulders, and the coordinate values $P_x^{up}$ and $P_y^{up}$ of each joint i are calculated as shown in [mathematical expression 2].

[Mathematical expression 2]

$$P_x^{up,i} = \sum_i^n J_x^i - C_x^{up}, \quad P_y^{up,i} = \sum_y^n J_y^i - C_y^{up}$$

Here, the distance between $J^{sh,l}$ and $J^{sh,r}$ becomes $D_{sh}^{up} = \sqrt{\left(J_x^{sh,l} - J_x^{sh,r}\right)^2} - \left(J_y^{sh,l} - J_y^{sh,r}\right)^2$.

Standardized coordinates $P'_x{}^{up,i}$ and $P'_y{}^{up,i}$ of each joint i are calculated as shown in

[Mathematical expression 3]

$$P'^{up,i}_X = \sum_{i}^{n} P^{up,i}_x - D^{up}_{sh}, \quad P'^{up,i}_y = \sum_{i}^{n} P^{up,i}_y - D^{up}_{sh}, \quad 0 \le i \le \delta$$

Recognition of a motion for the lower body may also be calculated in the same manner as the calculation formula for sensing the upper body.

A motion can be divided into a standing motion and a lying down motion, and in order to distinguish these motions, an angle $A_{SP}$ between the spine and the x-axis is calculated as shown in [mathematical expression 4].

[Mathematical expression 4]

$$A_{sp} = \arctan\left(\frac{C^{up}_y - C^{low}_y}{C^{up}_x - C^{low}_x}\right)$$

Here, $C^{UP}$ and $C^{low}$ may be obtained from the calculation formula of $C^{up}_x$ and $C^{up}_y$ using a distance deviation of each joint from the center point described above and the calculation formula of the coordinate values $P^{up}_x$ and $P^{up}_y$ of each joint i. An angle of $A_{up}$, low between two vectors of $V^{up}$ and $V^{low}$ need to be obtained for a bending motion something like a bow, and its calculation formula is as shown in [mathematical expression 5].

[Mathematical expression 5]

$$V^{up}_x = J^{8p}_x - C^{up}_x, \quad V^{up}_y = J^{8p}_y - C^{8p}_y, \quad V^{low}_x = J^{8p}_x - C^{low}_x, \quad V^{low}_y = J^{8p}_y - C^{low}_y$$

$$A_{up,low} = \arccos\left(\frac{V^{up}V^{low}}{\left|V^{up}\right|\left|V^{low}\right|}\right)$$

Here, $J^{sp}$ denotes the spine.

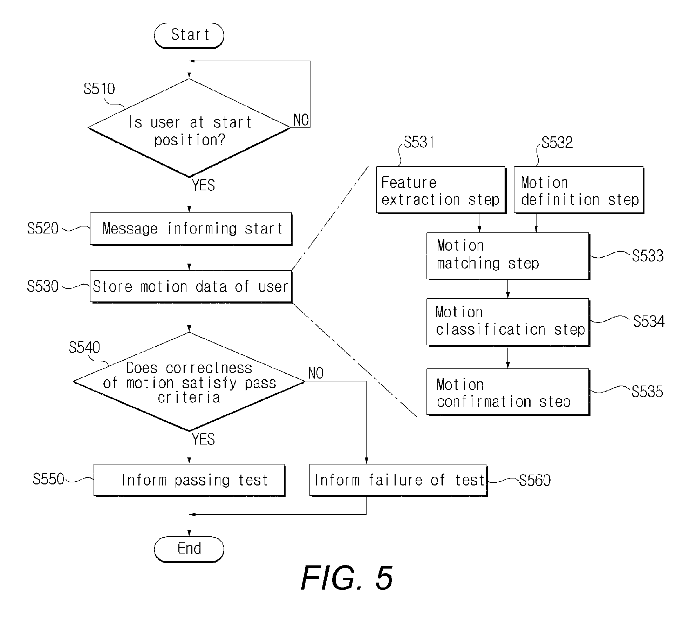

FIG. 5 is a flowchart illustrating the entire flow of a Taekwondo Poomsae recognition and Dan promotion test apparatus based on a skeleton of a human body using a depth camera.

When a Dan promotion test is started for Taekwondo Poomsae recognition and Dan promotion, a person should stand at a starting position (S510). The starting position should be within at least 40cm to 5m from the depth camera. When the person stands at the starting position, a message for informing start of the Poomsae is generated (S520), and the person performs the Poomsae and motions of a corresponding test while seeing the camera from the time point of seeing the message. At least one or up to four cameras are installed around the person to correctly recognize the Poomsae and the motions of the person performing the motions. While the person performs the Poomsae and the motions, features of the motions performed by the person are stored in the user motion recognition database in real-time through the depth sensor and the visual sensor of the depth camera (S530), and the stored data are used to finally recognize the motion of the person through a motion matching step (S533), a motion classification step (S534) and a motion confirmation step (S535).

After performing the step of comparing the recognized motion of the person with the data of the standard Poomsae movement database storing standard data on the Poomsae and the motion and judging correctness of the Poomsae and the motion (S540), whether or not the person has finally passed the test is determined (step S550).

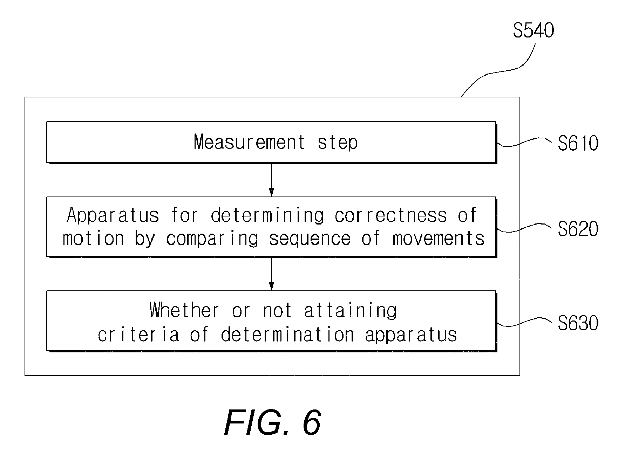

FIG. 6 is a flowchart illustrating the detailed flow of a judgment step.

The apparatus further includes the steps of measuring correctness of the motion (S610) by receiving coordinates from the depth camera at the judgment step (S540) and comparing the received coordinates with previously stored coordinates, determining correctness of the motion by comparing a continued sequence of Taekwondo Poomsae movements (S620), and determining whether or not criteria of passing the Dan promotion test are attained (S630). When correctness of the motion is determined by comparing the sequence of Taekwondo Poomsae movements, correctness of the motion is judged by comparing a coordinate value of the x, y and z axes of an object and an angle among the axes, and if the correctness of the motion is between 60 and 100% after the judgment, passing the test is informed.

In the present invention, three hundred and sixty nine data values are defined for the motions by using a Dynamic Time Warping algorithm for correct measurement. That is, three hundred and sixty nine values needed between a start point of a motion of a first movement and an end point ending the motion are arranged by using the Dynamic Time Warping algorithm. The step of measuring correctness (S610) obtains values needed between a start point of a motion and an end point ending the motion by using the data arranged through the Dynamic Time Warping algorithm and obtains correctness of the motion by using the coordinate value and the arranged data.

It is possible to recognize a correct Poomsae of Taekwondo motions of a person and prevent scoring and judging errors and the like which can occur when a Dan promotion test is performed by using a Taekwondo Poomsae recognition and Dan promotion test apparatus based on a skeleton of a human body using a depth camera according to an embodiment of the present invention.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A Taekwondo Poomsae recognition and Dan promotion test apparatus based on a skeleton of a human body using a camera, the apparatus comprising:

   a feature extraction unit for extracting features of an object input from the depth camera;
   a motion definition unit for defining various motions of the object;
   a motion recognition unit for recognizing a behavior of the object using the information obtained through the feature extraction unit and the motion definition unit; and
   a judgment unit for judging correctness of a motion of the object confirmed by the motion recognition unit.

2. The apparatus according to claim 1, wherein the depth camera includes a depth sensor and a visual sensor.

3. The apparatus according to claim 1, wherein the motions are divided into a simple motion, a complicated motion, and a motion using various parts of the body, and the motion definition unit further includes a motion analysis unit.

4. The apparatus according to claim 2, wherein the motion recognition unit further includes a motion classification unit for classifying a motion of the object, a motion matching unit for matching the motion, and a motion confirmation unit for confirming the motion of the object.

5. The apparatus according to claim 4, wherein the motion recognition unit includes a user motion recognition database for storing the confirmed motion.

6. The apparatus according to claim 4, wherein the judgment unit further includes a standard Poomsae movement database and measures correctness of a motion by receiving coordinates from the depth camera and comparing the coordinates with previously stored coordinate values.

7. The apparatus according to claim 6, wherein the step of measuring correctness obtains values needed between a start point of the motion and an end point ending the motion using data arranged through a Dynamic Time Warping algorithm and obtains correctness of the motion by using the coordinate value and the arranged data.

8. The apparatus according to claim 7, wherein the coordinate value is a coordinate value of x, y and z axes of the object.

9. A method for Poomsae recognition and Dan promotion test of Taekwondo based on a skeleton of a human body using a camera, the method comprising the steps of:

   a feature extraction step of extracting features of an object input from the depth camera;
   a motion definition step of defining various motions of the object;
   a motion recognition step of recognizing a behavior of the object using the information obtained through the feature extraction step and the motion definition step; and
   a judgment step of judging correctness of a motion of the object confirmed by the motion recognition unit.

10. The method according to claim 9, wherein the motions are divided into a simple motion, a complicated motion, and a motion using various parts of the body, and the motion definition step further includes a motion analysis step.

11. The method according to claim 10, wherein the motion recognition step further includes a motion classification step of classifying a motion of the object, a motion matching step of matching the motion, and a motion confirmation step of confirming the motion of the object.

12. The method according to claim 11, wherein the motion recognition step includes a user motion recognition database for storing the confirmed motion.

13. The method according to claim 12, wherein the judgment step further includes a standard Poomsae movement database and further includes the steps of
measuring correctness of a motion by receiving coordinates from the depth camera and comparing the coordinates with previously stored coordinate values,
determining correctness of the motion by comparing a continued sequence of Taekwondo Poomsae, and
determining and informing whether or not criteria of passing a Dan promotion test are attained.

14. The method according to claim 13, wherein the step of measuring correctness obtains values needed between a start point of the motion and an end point ending the motion using data arranged through a Dynamic Time Warping algorithm and obtains correctness of the motion by using the coordinate value and the arranged data.

15. The method according to claim 9, wherein the pass criterion is 60 to 100% of the correctness of the motion.

*FIG. 1*

Feature extraction unit — 110

Motion definition unit — 120
  Motion analysis unit — 121

Motion recognition unit — 130
  Motion confirmation unit — 133
  Motion classification unit — 132
  Motion matching unit — 131

Judgment unit — 140

Standard Poomsae movement database — 160

Motion recognition database — 150

FIG. 2(a) FIG. 2(b) FIG. 2(c)

FIG. 3(b)

FIG. 3(a)

FIG. 4(a)

FIG. 4(b)

FIG. 5

S540

| Measurement step | S610 |

↓

| Apparatus for determining correctness of motion by comparing sequence of movements | S620 |

↓

| Whether or not attaining criteria of determination apparatus | S630 |

## FIG. 6

**EP 3 009 957 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020130044473